Europäisches Patentamt

European Patent Office

Office européen des brevets

(11) Veröffentlichungsnummer: **0 039 418**
**B1**

# EUROPÄISCHE PATENTSCHRIFT

(12)

(45) Veröffentlichungstag der Patentschrift:
**11.01.84**

(21) Anmeldenummer: **81102640.0**

(22) Anmeldetag: **08.04.81**

(51) Int. Cl.³: **F 16 N 13/16**

(54) **Pressluftbetätigte Schmierpresse.**

(30) Priorität: **02.05.80 AT 2359/80**

(43) Veröffentlichungstag der Anmeldung:
**11.11.81 Patentblatt 81/45**

(45) Bekanntmachung des Hinweises auf die Patenterteilung:
**11.01.84 Patentblatt 84/2**

(84) Benannte Vertragsstaaten:
**BE CH DE FR GB IT LI LU NL SE**

(56) Entgegenhaltungen:
**DE - B - 1 072 120**
**GB - A - 426 333**
**GB - A - 1 267 912**
**US - A - 2 298 920**
**US - A - 2 743 581**

(73) Patentinhaber: **MATO Maschinen- und
Metallwarenfabrik Curt Matthaei GmbH & Co KG,
Bieberer Strasse 215-217, D-6050 Offenbach am Main
(DE)**

(72) Erfinder: **Der Erfinder hat auf seine Nennung verzichtet**

(74) Vertreter: **Holzhäuser, Peter Karl, Dr.-Ing. et al,
Patentanwälte Dr.-Ing. P.K. Holzhäuser Dipl.-Met. W.
Goldbach Dipl.-Ing.Ing. L. Schieferdecker
Herrnstrasse 37, D-6050 Offenbach am Main (DE)**

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

Preßluftbetätigte Schmierpresse

Die pneumatisch angetriebene Faßpumpe ist im Rahmen der manuellen Schmierung das wichtigste Gerät. Sie ermöglicht die Entnahme des Schmierstoffes unmittelbar aus den Originalgebinden unter gleichzeitiger Weiterförderung und zwar sowohl bei Niederdruck-Mengenförderung als auch bei Hochdruckschmierung.

Die Erfindung betrifft eine preßluftbetätigte Schmierpumpe, bei der ein Luftmotor, der bei Erreichen der Endlage selbsttätig umgeschaltet wird, über ein Zwischengestänge eine Hochdruckpumpe betätigt, mit welcher das Schmiermittel, insbesondere Schmierfett, aus Behältern direkt in die Abschmierleitung gepumpt wird.

Bei solchen Schmierpumpen ist es bekannt, die Steuerung des Luftmotors oberhalb, neben oder unter dem Arbeitskolben innerhalb besonderer Bauteile anzuordnen.

Die Umschaltung wird hierbei vorzugsweise über eine im Inneren der Kolbenstange des Luftmotors angeordnete Zugstange bei Erreichen der Endlage des Kolbens bewirkt (siehe GB-A-426 333 und US-A-2 298 920).

Die Hochdruckpumpe kann hierbei in dem in das Schmiermittel eintauchenden Rohr angeordnet sein. Das Schmiermittel wird in zentrisch zum Förderkolben angeordneten Hohlräumen bis zur Entnahmestelle oberhalb des Eintauchrohres gefördert. Üblicherweise besteht das Eintauchrohr aus mehreren hochdruckdicht miteinander verschraubten Bauteilen. Die hierbei unvermeidlichen Stoßstellen auf der Außenseite des Eintauchrohres behindern das Gleiten des auf diesem Rohr geführten Folgekolbens. Daher wurde bereits ein Schutzrohr über diesem Rohr angeordnet.

Wegen der hohen Baukosten für die bekannten preßluftbetätigten Schmierpumpen sind sie nur für eine relativ geringe Anzahl von Schmieraufgaben wirtschaftlich einsetzbar.

Die Erfindung bezweckt die Schaffung einer solchen Schmierpumpe, deren Herstellungskosten durch eine neuartige Anordnung der Pumpenelemente wesentlich gesenkt werden können, so daß die Schmierpumpe gemäß der Erfindung anstelle von Handpumpen in einem weiteren Anwendungsbereich wirtschaftlich eingesetzt werden kann.

Der Erfindungszweck wird durch die in den Ansprüchen genannten Merkmale erreicht.

Eine Ausführungsform des Erfindungsgegenstandes ist in den Zeichnungen beispielsweise und rein schematisch dargestellt, und zwar zeigt

Fig. 1 einen senkrechten Schnitt durch die in einen Schmiermittelbehälter eingesetzte Pumpe, im Längsschnitt nach Linie I-I in Fig. 4,

Fig. 2 einen vergrößerten Teilschnitt gemäß Fig. 1 nach Linie I-II in Fig. 4,

Fig. 3 einen Querschnitt nach Linie III-III in Fig. 2,

Fig. 4 einen Horizontalschnitt durch das Kopfstück der Pumpe nach Linie IV-IV in Fig. 1,

Fig. 5 einen senkrechten Teilschnitt nach Linie V-X in Fig. 4,

Fig. 6 eine Darstellung gemäß Fig. 4 für eine abgeänderte Ausführungsform und

Fig. 7 einen senkrechten Teilschnitt durch das Schutzrohr nach der Linie XI-XIV in Fig. 3.

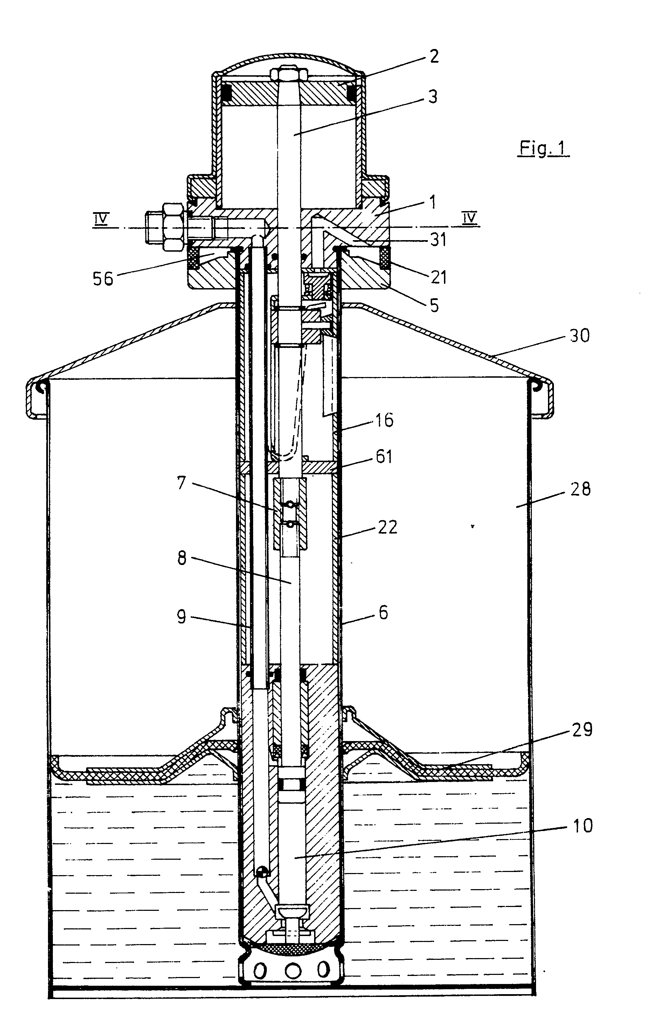

Gemäß Fig. 1 ist durch den Schutzdeckel 30 des Fettbehälters 28 die Schmierpresse senkrecht eingesetzt. In den Fettbehälter 28 ragt das Schutzrohr 6 mit dem Folgekolben 29.

Im unteren Teil des Schutzrohres 6 liegt der Hochdruckzylinder 10, in dessen oberes Ende die Steigleitung 9 eingeschraubt ist, die zum Kopfstück 1 der Presse oberhalb des Deckels 30 führt. In der Mittelachse des Schutzrohres 6 liegt der Hochdruckkolben 8, welcher mittels einer Gewindemutter 7 mit dem unteren Ende der Kolbenstange 3 des Luftmotors verbunden ist. Das untere Ende der Kolbenstange 3 ist in einer ortsfesten Scheibe 61 geführt. Zwischen der Scheibe 61 und der Oberseite des Hochdruckzylinders 10 liegt ein Distanzrohr 22. Oberhalb der Scheibe 61 liegt ein Rohreinsatz 16. Das Schutzrohr 6 ist mit dem Kopfstück 1 der Schmierpresse durch einen Spannring 5 verbunden.

In der Darstellung gemäß Fig. 1 ist im Kopfstück 1 die Luftaustrittsbohrung ersichtlich, welche in einer Spitzkehre in den Luftaustrittsraum 56 mündet, welcher nach außen durch einen Schalldämpfring 21 begrenzt ist.

Aus Fig. 1 ist die konisch gedrungene und robuste Bauart der Schmierpresse gemäß der Erfindung ohne empfindliche außenliegende Teile ersichtlich. Durch die unsymmetrische Anordnung der Steigleitung 9 entfallen die starkwandigen Rohre und deren teuere druckdichte Verschraubungen bei herkömmlichen Bauarten.

Bei der Schmierpresse gemäß der Erfindung genügt ein dünnwandiges Stahlrohr, wie es für fest verlegte Schmierleitungen üblich ist. Dieses Stahlrohr 9 kann in einfacher Weise zwischen dem Hochdruckzylinder 10 und dem Kopfstück 1 eingesetzt werden.

Durch die seitliche Verlagerung des Steigrohres 9 wird gleichzeitig der Raum zum Einbau einer einfachen Schiebersteuerung frei.

Erfindungsgemäß liegt die Ebene der Schiebersteuerung senkrecht zur Kolbenstange 3 bzw. parallel zur Fläche des Kolbens 2 des Preßluftkolbens. Hierdurch kann das Kopfstück 1 sehr kurz gehalten werden, wodurch gleichzeitig kurze Luftwege und günstige Umschaltzeiten erreicht werden.

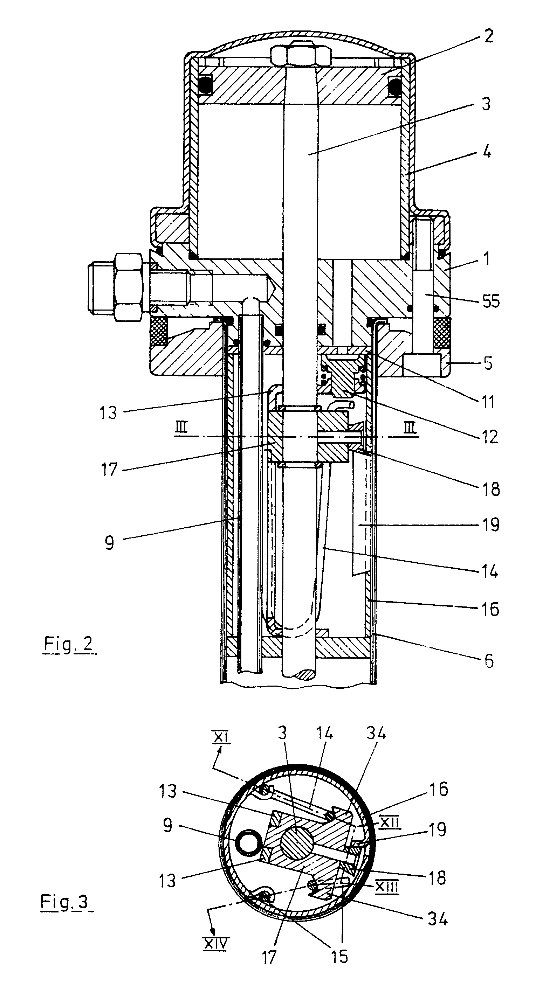

Die Schiebersteuerung gemäß der Erfindung ist in den Fig. 2 und 3 dargestellt.

An der Unterfläche des Kopfstücks 1 liegt die Steuerplatte 11 für den unter ihr liegenden Steuerschieber 12. Dieser wird durch einen Schwenkhebel 13 gehalten und geführt. Der Schwenkhebel ist an zwei Stellen mit dem Schalthebel 17 verbunden. Der Schalthebel 17 ist auf der Kolbenstange 3 in axialer Richtung fest, aber radial schwenkbar gelagert. Der Schalthebel 17 trägt eine Schaltrolle 18, die auf einer Steuerzunge 19 abrollt (Fig. 7).

An der Innenseite des Rohreinsatzes 16 sind zwei Schenkelfedern 14 und 15 einander gegenüberliegend angeordnet (Fig. 7). Durch die Auf- und Abwärtsbewegung des Schalthebels 17 mit der Kolbenstange 3 werden die Federn 14, 15 abwechselnd durch die Umschaltnocken 34 des Schalthebels 17 gespannt, so daß nach Erreichen der oberen bzw. unteren Endlage des Preßluftkolbens 2 die Schaltrolle 18 von der einen auf die andere Seite der Steuerzunge 19 geschaltet wird. Hierdurch wird eine besonders genaue Umsteuerung erreicht, so daß mit geringeren Toträumen im Preßluftzylinder 4 gearbeitet werden kann. Die Steuerzunge 19 ist in einfacher Weise durch Herausstanzen aus dem Rohreinsatz 16 gebildet. Die Schenkelfedern 14, 15 werden durch aus dem Rohreinsatz 16 nach innen ausgestanzte Ösen gehalten (Fig. 7).

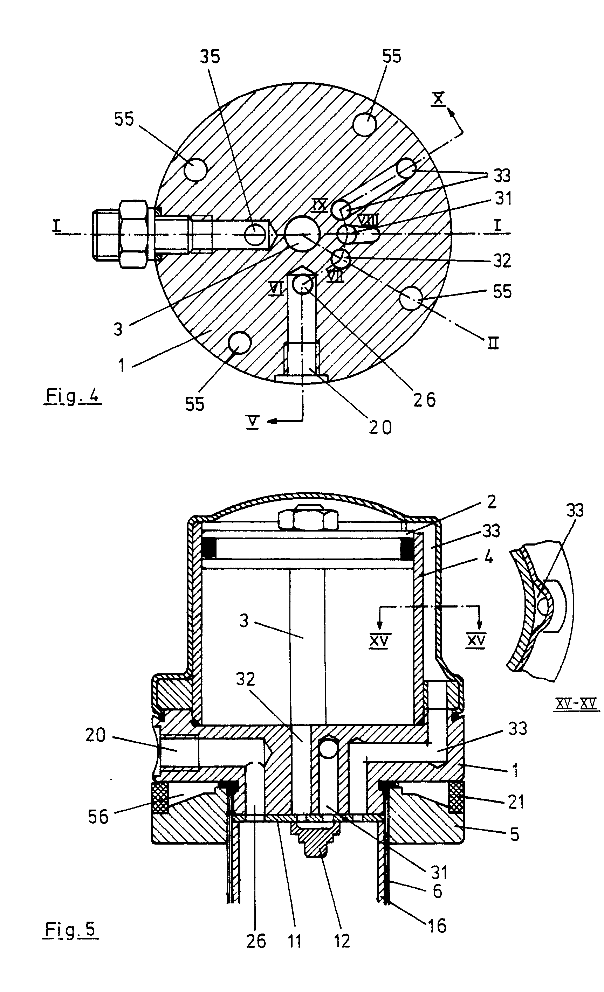

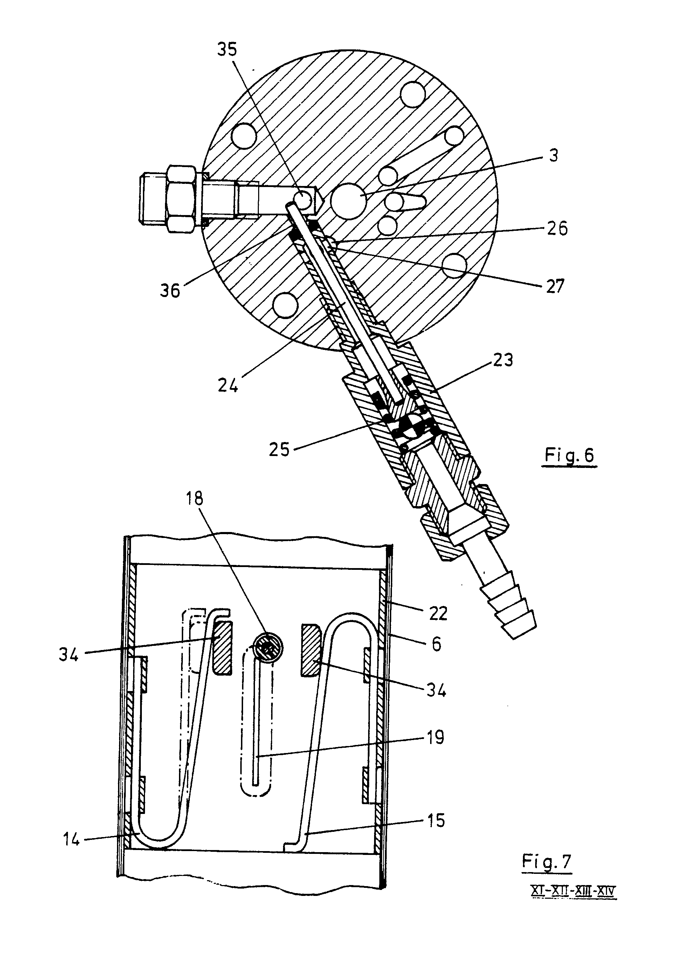

Aus den Fig. 4 und 5 ist die Anordnung aller notwendigen Bohrungen im Kopfstück 1 ersichtlich. Durch die Luftanschlußbohrung 20 wird Preßluft in das Schutzrohr 6 geleitet. Aus dieser vom Schutzrohr 6 gebildeten Luftkammer tritt die Preßluft über die Kanäle 32 bzw. 33 unterhalb bzw. oberhalb des Kolbens 2 in den Zylinderraum des Luftmotors ein. Der Kolben 2 läuft in der Laufbüchse 4. Der Luftaustritt erfolgt durch die spitzwinklige Bohrung 31 in den ringförmigen Raum 56 zwischen Spannring 5 und Kopfstück 1.

Der Raum 56 wird nach außen durch einen Ring 21 aus schalldämpfendem luftdurchlässigem Material begrenzt. Durch die ringförmige Ausbildung wird eine besonders große Austrittsoberfläche für die Preßluft erreicht und damit ein besonders leiser Lauf des Luftkolbenmotors erzielt.

Die Wirkungsweise der Steuerung des Luftmotors ist folgende:

Die Schaltrolle 18 rollt auf der Steuerzunge 19 bei der Auf- und Abwärtsbewegung des Luftkolbens 2 ab. Der Schalthebel 17 trägt zwei Umschaltnocken 34. Diese Umschaltnocken spannen während der Kolbenbewegung jeweils einen Schenkel der Federn 14 und 15. Da sich während des Kolbenweges die Schaltrolle 18 gegen die Steuerzunge 19 abstützt, kann die betreffende Feder die Umschaltung erst bewirken, wenn die Schaltrolle das betreffende Ende der Steuerzunge 19 erreicht.

In Fig. 7 ist der Schenkel der Schaltfeder 14 in seiner Stellung vor der Umschaltung strichpunktiert dargestellt. Die Stellung der Schaltrolle 18 in Fig. 7 entspricht der Position nach erfolgter Umschaltung, wenn der Preßluftkolben 2 seinen Abwärtsweg beginnt.

Beim Umsteuern durch den Schwenkhebel 13 wird der Steuerschieber 12 jeweils in eine Endlage verschoben, so daß jeweils die Bohrungen 32 bzw. 33 (Fig. 5) mit der Luftaustrittsbohrung 31 verbunden sind.

Fig. 6 zeigt die Anordnung eines Druckbegrenzungsventils 23 am Kopfstück 1 in besonders einfacher und vorteilhafter Weise.

Die Anordnung solcher Druckbegrenzungsventile ist an sich bekannt. Jedoch war hierzu eine Verbindungsleitung außerhalb des Pumpenkörpers notwendig. Bei der Anordnung gemäß Fig. 6 ist die Zuführungsbohrung für die Preßluft so angeordnet, daß die Achse dieser Bohrung in den Hochdruckraum für das austretende Fett trifft.

Dann kann in an sich bekannter Weise über einen Schaltstift 24 eine Spiralfeder 25 zusammengedrückt werden, so daß bei Erreichen des maximal zulässigen Schmierdruckes die Preßluftzufuhr abgesperrt wird. Die Luftaustrittsbohrung 26 ist aber so angeordnet, daß die Luft direkt aus den Querbohrungen 27 des Ventilkörpers 23 in den Luftraum im Führungsrohr eintreten kann.

Aus den vorstehenden Ausführungen ergibt sich die günstige Ausführung, mit nur wenigen Teilen mit geringerem Materialaufwand als bisher sowie die Tatsache, daß diese Teile selbst einfacher und wirtschaftlicher als bisher hergestellt werden können.

So kann beispielsweise das Schutzrohr 6 so ausgebildet werden, daß es etwas kürzer ausfällt als die in ihm untergebrachten Teile (Hochdruckzylinder 10, Rohreinsatz 16, Distanzrohr 22). Hierdurch wird es möglich, diese Teile durch den Spannring 5 so gegen das Kopfstück 1 mittels der Schrauben 55 vorzuspannen, daß ein einwandfreies Arbeiten im Hochdruckteil gewährleistet ist.

Für den Zusammenbau der gesamten Presse genügen vier normale Innensechskantschrauben 55. Dies wirkt sich ebenfalls günstig aus, da die Anfertigung teuerer Gewinde mit großem Durchmesser vermieden wird.

Ein wesentlicher Vorteil der Schmierpresse gemäß der Erfindung liegt in ihrer Verwendbarkeit auch außerhalb des Schmiersektors auf anderen Marktgebieten, z. B. als Antriebsmittel für hydraulikbetätigte Werkzeuge. Diese benötigen zwar in der Regel nur relativ geringe Fördermengen, werden jedoch mit einem hohen Druck betätigt, so daß sich die Schmierpumpe gemäß der Erfindung wegen ihrer Preiswürdigkeit auch auf diesem Gebiet wirtschaftlich einsetzen läßt.

Die Erfindung ist nicht auf die beschriebenen Ausführungsformen beschränkt. Vielmehr können Einzelheiten geändert und dem jeweiligen Verwendungszweck angepaßt werden, ohne vom grundsätzlichen Erfindungsgedanken abzuweichen.

**Patentansprüche**

1. Preßluftbetätigte Schmierpumpe, bei welcher ein selbsttätig, mittels einer Steuerung umschaltender Luftmotor eine in einem Schutzrohr angeordnete Hochdruckpumpe betätigt, gekennzeichnet durch die Kombination folgender Merkmale:

a) das Schutzrohr (6) über der Hochdruckpumpe (10) dient als Preßluftkammer;
b) die Steigleitung (9) für das unter Hochdruck stehende Medium im Behälter (28) ist im Schutzrohr exzentrisch zur Kolbenstange (3) des Luftmotors angeordnet;
c) der Steuerschieber des Preßluftmotors ist im Schutzrohr (6) angeordnet.

2. Preßluftbetätigte Schmierpumpe nach Anspruch 1, dadurch gekennzeichnet, daß die Bewegungsebene des Steuerschiebers (12) rechtwinklig zur Kolbenstange (3) des Luftmotors liegt.

3. Preßluftbetätigte Schmierpumpe nach Anspruch 1 und 2, dadurch gekennzeichnet, daß der Schwenkhebel (13), der das Öffnen und Schließen der Luftkanäle (31, 32, 33) steuert, um die Achse der Kolbenstange (3) schwenkbar ist und daß dieser Schwenkhebel durch einen auf der Kolbenstange drehbaren Schalthebel (17) bewegt wird.

4. Preßluftbetätigte Schmierpumpe nach Anspruch 1—3, dadurch gekennzeichnet, daß der Schalthebel (17) durch eine Schaltrolle (18) in seiner Lage gehalten wird, während die Schaltrolle (18) auf einer Steuerzunge (19) abrollt und daß die Umschaltung unter Wirkung von Federn (14, 15) erfolgt, wenn die Schaltrolle die Zunge (19) am Zungenende überrollt.

5. Preßluftbetätigte Schmierpumpe nach Anspruch 1, dadurch gekennzeichnet, daß die Zutrittsbohrung (26) für die Preßluft und die Austrittsbohrung (35) für das Schmiermittel durch eine Bohrung (36) verbunden sind und daß in dieser Bohrung ein Steuerkolben (24) angeordnet ist (Fig. 6).

## Claims

1. A compressed air powered lubrication pump, wherein an air power motor, reversed automatically by a controller, is used for driving a high pressure pump placed in a guard tube, characterized in that:

(a) the guard tube (6) over the high pressure pump (10) is used as a compressed air plenum;
(b) the upwardly running duct (9) for the medium under a high pressure in the vessel (28) is placed eccentrically in the guard tube in relation to the piston rod (3) of the air power motor; and
(c) the slide valve of the air power motor is placed in the guard tube (6).

2. The compressed air powered lubrication pump as claimed in claim 1 characterized in that the plane of motion of the slide valve (12) is at a right angle to the piston rod (3) of the air power motor.

3. The compressed air powered lubrication pump as claimed in claim 1 and claim 2 characterized in that the rocker lever (13), causing the opening and shutting of the air ducts (31, 32 and 33) may be rocked about the axis of the piston rod (3) and in that this rocker lever is moved by a driving lever (17) able to be turned on the piston rod.

4. The compressed air powered lubrication pump as claimed in claims 1 to 3 characterized in that the control lever (17) is kept in place by a driving wheel (18), while the driving wheel (18) is rolling along a driving lug (19) and in that the reversal is caused by springs (14 and 15), when the driving wheel is run over the lug (19) and the end thereof.

5. The compressed air powered lubrication pump as claimed in claim 1 characterized in that the inlet hole (26) for the compressed air and the outlet hole (35) for the lubricant are joined together by a hole (36) and in that a control piston (24) is placed in this hole (Fig. 6).

## Revendications

1. Pompe de graissage à commande par air comprimé dans laquelle un moteur pneumatique, dont la commutation s'effectue automatiquement au moyen d'un dispositif de commande, met en action une pompe à haute pression montée à l'intérieur d'un tube de protection, caractérisée en ce que le tube de protection (6) situé autour et au-dessus de la pompe à haute pression (10) sert de chambre à air comprimé, que le conduit d'ascension (9) du milieu qui se trouve sous forte pression dans le réservoir (28) est, à l'intérieur du tube de protection, excentré par rapport à la tige de piston (3) du moteur pneumatique, et que le registre de commande du moteur pneumatique se trouve à l'intérieur du tube de protection (6).

2. Pompe de graissage à commande par air comprimé selon la revendication 1, caractérisé en ce que le plan de déplacement du registre de commande (12) est perpendiculaire à la tige de piston (3) du moteur pneumatique.

3. Pompe de graissage à commande par air comprimé selon l'une des revendications 1 ou 2, caractérisée en ce que le levier pivotant (13) qui commande l'ouverture et la fermeture des canaux (31, 32, 33) conduisant l'air peut pivoter autor de l'axe de la tige de piston (3) et que ce levier pivotant se déplace sous l'action d'un levier d'enclenchement et de commutation (17) qui peut tourner sur la tige de piston.

4. Pompe de graissage à commande par air comprimé selon l'une des revendications 1 à 3, caractérisée en ce que le levier d'enclenchement et de commutation (17) est maintenu par un galet d'enclenchement et de commutation (18) tandis que le galet d'enclenchement et de commutation (18) roule sur une languette de commande (19) et que la commutation des mouvements s'effectue sous l'action de ressorts (14, 15) lorsque le galet d'enclenchement et de commutation passe sur l'extrémité de la languette (19).

5. Pompe de graissage à commande par air comprimé, selon la revendication 1, caractérisée en ce que le conduit (26) d'amenée de l'air comprimé et le conduit (35) de sortie du produit de graissage sont reliés par une ouverture (36) et en ce qu'un piston de commande (24) passe par cette ouverture (figure 6).

0 039 418

Fig. 1

7

Fig. 2

Fig. 3

0 039 418

Fig. 4

Fig. 5

11

Fig. 6

Fig. 7

XI-XII-XIII-XIV